# EUROPEAN PATENT APPLICATION

(11) **EP 4 641 743 A1**
(43) Date of publication of application: **29.10.2025**
(21) Application number: 24894301.1
(22) Date of filing: 01.08.2024
(51) Int. Cl.: H01M 10/0585, H01M 4/134, H01M 10/0562, H01M 10/052, H01M 4/02

(54) **ALL-SOLID-STATE BATTERY**

(30) Priority: 21.11.2023 KR 20230162269
(71) Applicant: LG Energy Solution, Ltd., Seoul 07335 (KR)
(72) Inventor: YOM, Jeeho, Daejeon 34122 (KR); CHOI, Ran, Daejeon 34122 (KR)
(74) Representative: Goddar, Heinz J.
(86) International application number: PCT/KR2024/011334
(87) International publication number: WO 2025/110404

(57) **Abstract**

According to the present disclosure, provided is an all-solid-state battery, particularly an all-solid-state battery in which a lithium layer is formed during a charging process without forming a separate negative electrode active material layer on a negative electrode current collector during the manufacturing process of the battery, wherein energy density may be further maximized by not including amorphous carbon between the negative electrode current collector and a solid electrolyte layer, and the lithium dendrites may be prevented from growing through the gaps in the solid electrolyte layer as charging and discharging processes are repeated, even without including amorphous carbon, thereby solving the defects of generating short circuits or capacity reduction, and further, exhibiting excellent capacity retention according to the cycle.

## Description

### Technical Field

This application claims the benefit of priority on the basis of Korean Patent Application No. 2023-0162269, filed on November 21, 2023, and the entire contents disclosed in the Korean Patent Application are incorporated herein as a part of the specification. The present disclosure relates to an all-solid-state battery in which a lithium layer is formed during a charging process without forming a separate negative electrode active material layer on a negative electrode current collector during the manufacturing process of the battery.

### Background Art

Recently, all-solid-state batteries with high energy density and stability have been proposed due to industrial demands, and efforts are being conducted to further improve the properties. For example, a method of using lithium as a negative electrode active material is being studied to increase the energy density of all-solid-state batteries.

As a method of using lithium as a negative electrode active material, a method of using lithium or a lithium alloy as a negative electrode active material layer during the manufacturing process of a battery, or a method of forming a lithium layer during a charging process without forming a separate negative electrode active material layer on a negative electrode current collector during the manufacturing process of a battery has been proposed.

However, if lithium is used as a negative electrode active material, lithium (metallic lithium) is deposited on a negative electrode side during charging, and as charging and discharging processes are repeated, lithium dendrites grow through the gaps in a solid electrolyte layer, which causes defects such as a battery short circuit or reduction in capacity.

Accordingly, in order to commercialize the method of using lithium as a negative electrode active material, there is a need to improve the above defects.

### Disclosure of Invention

### Technical Goals

The present disclosure is for solving the above defects and for providing an all-solid-state battery, particularly an all-solid-state battery in which a lithium layer is formed during a charging process without forming a separate negative electrode active material layer on a negative electrode current collector during the manufacturing process of the battery, wherein energy density may be further maximized by not including amorphous carbon between the negative electrode current collector and a solid electrolyte layer, and lithium dendrites are prevented from growing through the gaps in the solid electrolyte layer as charging and discharging processes are repeated even without including amorphous carbon, thereby solving the defects of generating short circuits or capacity reduction, and further, exhibiting excellent capacity retention according to the cycle.

### Technical solutions

An aspect of the present disclosure is related to an all-solid-state battery using lithium or a lithium alloy as a negative electrode active material. The all-solid-state battery includes a negative electrode current collector and a solid electrolyte layer, and a silver (Ag) nanolayer is included between the negative electrode current collector and the solid electrolyte layer, or silver (Ag) nanoparticles are distributed between the negative electrode current collector and the solid electrolyte layer. Amorphous carbon is not included between the negative electrode current collector and the solid electrolyte layer.

In an embodiment, after manufacturing the battery, the silver (Ag) nanolayer may be included between the negative electrode current collector and the solid electrolyte layer before charging, and the silver (Ag) nanoparticles may be distributed between the negative electrode current collector and the solid electrolyte layer after charging.

In an embodiment, the silver (Ag) nanolayer may be a silver deposition layer.

In an embodiment, a thickness of the silver (Ag) nanolayer may be 1000 nanometers (nm) or less.

In an embodiment, an average particle diameter of the silver (Ag) nanoparticles may be 1000 nm or less.

In an embodiment, after manufacturing the battery and before charging, a ratio (d₂/d₁) of a distance (d₂) between a surface of the negative electrode current collector and the solid electrolyte layer to a thickness (d₁) of the negative electrode current collector may be 0.001 to 0.1.

In an embodiment, when fully charged, a ratio (d₃/d₁) of a distance (d₃) between a surface of the negative electrode current collector and the solid electrolyte layer to a thickness (d₁) of the negative electrode current collector may be 0.5 to 10.

In an embodiment, when completely discharged, a ratio (d₄/d₁) of a distance (d₄) between a surface of the negative electrode current collector and the solid electrolyte layer to a thickness (d₁) of the negative electrode current collector may be 0.01 or less.

In an embodiment, the solid electrolyte layer may include a sulfide-based solid electrolyte.

In an embodiment, the sulfide-based solid electrolyte may be one or more selected from the group including Li₂S-P₂S₅-Li₂O, Li₂S-P₂S₅-Li₂O-LiI, Li₂S-LiBr-LiI-P₂S₅, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q} (p and q are positive numbers, and M is one among P, Si, Ge, B, Al, Ga and In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers, and Z is one of Ge, Zn or Ga), Li₂S-GeS₂, Li₇₋ₓPS₆₋ₓClₓ (0≤x≤2), Li₇₋ₓPS₆₋ₓBrₓ (0≤x≤2) and Li₇₋ₓPS₆₋ₓIₓ (0≤x≤2).

In an embodiment, the all-solid-state battery of the present disclosure may further include a positive electrode.

In an embodiment, the all-solid-state battery of the present disclosure, when completely discharged, may have a thickness of 120 to 180 micrometers (µm) based on a monocell including one negative electrode and one positive electrode.

In an embodiment, the all-solid-state battery of the present disclosure, when fully charged, may have a thickness of 150 to 210 µm based on a monocell including one negative electrode and one positive electrode.

In an embodiment, the all-solid-state battery of the present disclosure, as a result of lifespan characteristics evaluation, may have an initial discharge capacity of 185 milliampere-hours per gram mass (mAh/g) or more.

In an embodiment, the all-solid-state battery of the present disclosure may have, after 50 cycles, a capacity retention of 80% or more.

### Effects

According to the present disclosure, provided may be an all-solid-state battery in which a lithium layer is formed during a charging process without forming a separate negative active material layer on a negative electrode current collector during the manufacturing process of the battery, energy density may be further maximized by not including amorphous carbon between the negative electrode current collector and a solid electrolyte layer, and even without including amorphous carbon, the growth of lithium dendrites through gaps in the solid electrolyte layer may be prevented as charging and discharging processes are repeated, thereby solving the defects of short circuits or capacity reduction, and further exhibiting excellent capacity retention according to the cycle.

### Brief Description of Drawings

FIG. 1 is an image of the surface of a silver nanolayer taken by a scanning electron microscope (magnification: 1K).
FIG. 2 is an image of the surface of a silver nanolayer taken by a scanning electron microscope (magnification: 5K).
FIG. 3 shows images of the results of EDS analysis on the negative electrode of the Example.
FIG. 4 is a graph showing the capacity according to the cycle of the monocells of the Example and Comparative Examples.
FIG. 5 is a graph showing the capacity retention according to the cycle of the monocells of the Example and Comparative Examples.

### Best Mode for Carrying Out the Invention

Terms or words used in this specification and claims should not be construed as limited to their common or dictionary meanings, and it should be interpreted as meaning and concept consistent with the technical idea of the present disclosure based on the principle that the inventor may appropriately define the concept of terms in order to explain his or her invention in the best way.

Therefore, it is understood that the configuration of an embodiment described in this specification is one of the most desired embodiments of the present disclosure and does not represent the entire technical idea of the present disclosure, so various equivalents and modification examples that can replace the embodiments at the time of filing the present application may exist.

In this specification, singular expressions include plural expressions unless the context clearly indicates otherwise.

In this specification, if a part "includes" a certain element, it means that the part may further include other elements rather than excluding other elements, unless specifically stated to the contrary. Accordingly, for example, a composition including compound A may include compounds other than A. However, in certain embodiments, the term "including" also encompasses more limited meanings of "consisting essentially/inherently of" and "consisting of," and for example, "a composition including compound A" may also consist (essentially/inherently) of compound A.

In connection with this, as used in this specification, it should be understood that terms such as "being provided with" or "having" are intended to designate the presence of implemented features, numbers, operations, components, or combinations thereof, but not exclude in advance the possibility of the presence or addition of one or more other features, numbers, operations, components, or combinations thereof.

In this specification, if an arbitrary member is located "on" another arbitrary member, not only a case where such member is in contact with another member, but also a case where another member or substance exists between the two members are included.

If amounts, concentrations, or other values or parameters are given as listings of ranges, desirable ranges, desirable upper limits and desirable lower limits in this specification, it is to be understood that all ranges that may be formed from any pair of any upper range limits or desirable values and any lower range limits or desirable values, are specifically disclosed, regardless of whether the range is separately disclosed. If a range of numeric values is referred to in this specification, unless otherwise stated, for example, unless there is a limited term such as greater than and less than, the range is intended to include the endpoint values and all integers and fractions within the range. The scope of the present disclosure is not intended to be limited to the specific values referred to when defining a range.

Among the physical properties referred to in this specification, in cases where the measurement temperature affects the relevant physical properties, unless otherwise specified, the physical properties are measured at room temperature. The term room temperature is a natural temperature that is not heated or reduced, and may mean, for example, any temperature in a range of about 10 degrees Celsius (°C) to 30°C, about 23°C, or about 25°C. Additionally, unless otherwise specified, the unit of the temperature in this specification is °C.

In addition, among the physical properties referred to in this specification, in cases where the measurement pressure affects the relevant physical properties, unless otherwise specified, the physical properties are measured at normal pressure, that is, atmospheric pressure (about 1 atm).

An aspect of the present disclosure relates to an all-solid-state battery in which lithium or a lithium alloy is used as a negative electrode active material.

The all-solid-state battery may be characterized in, for example, including a negative electrode current collector and a solid electrolyte layer, including a silver (Ag) nanolayer between the negative electrode current collector and the solid electrolyte layer or silver (Ag) nanoparticles distributed between the negative electrode current collector and the solid electrolyte layer, and not including amorphous carbon between the negative electrode current collector and the solid electrolyte layer.

The present disclosure may be related to an all-solid-state battery using lithium or a lithium alloy as a negative electrode active material, particularly, an all-solid-state battery in which a separate negative electrode active material layer is not formed on a negative electrode current collector during the manufacturing process of the battery, and a lithium layer is formed during a charging process.

The lithium layer may include, for example, lithium or a lithium alloy.

In an all-solid-state battery in which a lithium layer is formed during a charging process without forming a separate negative electrode active material layer on a negative electrode current collector during the manufacturing process of the battery, a method introducing an anode-free coating layer containing essentially of amorphous carbon (for example, one or more selected from the group consisting of carbon black, acetylene black, furnace black, Ketjen black and graphene) between the negative electrode current collector and the solid electrolyte layer, has been proposed in order to solve defects such as the growth of lithium dendrites formed during charging and discharging processes, and the resultant occurrence of short circuits or capacity reduction. Although an exact mechanism has not been identified, it is expected that amorphous carbon may control the growth of lithium dendrites by uniformly precipitating lithium ions between an anode-free coating layer and a negative electrode current collector during a charging process, and in addition, an anode-free coating layer containing amorphous carbon may serve as a protective layer to control short circuits or the like. Accordingly, generally, amorphous carbon and/or an anode-free coating layer containing the same have been introduced between a solid electrolyte layer and a negative electrode current collector. In this specification, the term "anode-free coating layer" means a coating layer formed between a negative electrode current collector and a solid electrolyte layer in an all-solid-state battery in which lithium is absorbed into the anode-free coating layer during charging, and lithium is precipitated to form a lithium layer between the negative electrode current collector and the anode-free coating layer after the charge capacity of the anode-free coating layer is overcharged, and lithium in the anode-free coating layer and the lithium layer is ionized and moves toward a positive electrode during discharging.

However, since the anode-free coating layer also has a thickness of approximately 1 to 20 micrometers (µm), in order to further maximize energy density and further improve cycle characteristics, it is needed to further reduce the thickness of the anode-free coating layer, or to provide a new solution that achieves the above-mentioned purpose without introducing an anode-free coating layer.

It is confirmed that the present disclosure may provide an all-solid-state battery in which amorphous carbon may not be included between a negative electrode current collector and a solid electrolyte layer by including a silver (Ag) nanolayer between the negative electrode current collector and the solid electrolyte layer or distributing silver (Ag) nanoparticles between the negative electrode current collector and the solid electrolyte layer, and accordingly, energy density may be further maximized, and lithium dendrites may be prevented from growing through gaps in the solid electrolyte layer as charging and discharging processes are repeated even not including amorphous carbon, thereby solving defects of occurring short circuits or capacity reduction, and further achieving excellent capacity retention over the cycle.

The present disclosure may include, for example, a silver (Ag) nanolayer between the negative electrode current collector and the solid electrolyte layer.

The silver (Ag) nanolayer may be characterized in being, for example, a silver deposition layer. The silver deposition layer may be formed, for example, using a vacuum deposition method using an electron beam (E-beam evaporator). The silver nanolayer may be characterized in not containing materials other than silver (Ag). The silver nanolayer may not contain, for example, a binder, and thus may control an increase in battery resistance.

The thickness of the silver (Ag) nanolayer may be characterized in being, for example, 1000 nanometers (nm) or less. The thickness of the silver (Ag) nanolayer may be measured by, for example, a scanning electron microscope (SEM) and may mean an average thickness, a minimum thickness, and/or a maximum thickness. The thickness of the silver (Ag) nanolayer may be, in another embodiment, 950 nm or less, 900 nm or less, 850 nm or less, 800 nm or less, 750 nm or less, 700 nm or less, 650 nm or less, 600 nm or less, 550 nm or less, 500 nm or less, 450 nm or less, 400 nm or less, 350 nm or less, or 300 nm or less, or 10 nm or more, 20 nm or more, 30 nm or more, 40 nm or more, 50 nm or more, 60 nm or more, 70 nm or more, 80 nm or more, 90 nm or more, 100 nm or more, 110 nm or more, 120 nm or more, 130 nm or more, 140 nm or more, 150 nm or more, 160 nm or more, 170 nm or more, 180 nm or more, 190 nm or more, 200 nm or more, 210 nm or more, 220 nm or more, 230 nm or more, or 240 nm or more. The all-solid-state battery of the present disclosure may further improve energy density and capacity and may form a uniform lithium layer during a charging process by including the silver nanolayer of the thickness range as described above.

The all-solid-state battery of the present disclosure may have a form in which, for example, the silver nanolayer included between the negative electrode current collector and the solid electrolyte layer is rearranged into silver nanoparticles during a battery charging process, and the silver nanoparticles are distributed between the negative electrode current collector and the solid electrolyte layer. The rearrangement of the silver nanolayer into the silver nanoparticles is irreversible, and the form in which the silver nanoparticles are distributed between the negative electrode current collector and the solid electrolyte layer may be maintained after one time of battery charging. However, the presence of the silver nanolayer is not completely excluded in some parts between the negative electrode current collector and the solid electrolyte layer even after charging.

That is, the all-solid-state battery of the present disclosure may include the silver (Ag) nanolayer between the negative electrode current collector and the solid electrolyte layer before charging after manufacturing the battery, and may have a form in which silver (Ag) nanoparticles are distributed between the negative electrode current collector and the solid electrolyte layer after charging.

In this specification, the phrase "silver nanoparticles are distributed between the negative electrode current collector and the solid electrolyte layer" means that the silver nanoparticles exist in an area between the negative electrode current collector and the solid electrolyte layer in the form of primary particles and/or secondary particles, or, more desirably, from the viewpoint of controlling the growth of lithium dendrites, at least a portion or all of the silver nanoparticles exists in a state of being embedded on one surface of the solid electrolyte layer (for example, a surface facing the negative electrode current collector among both surfaces of the solid electrolyte layer). The silver nanoparticles may be uniformly or non-uniformly distributed between the negative electrode current collector and the solid electrolyte layer, and from the viewpoint of forming a uniform lithium layer during a charging process, desirably, the silver nanoparticles may be uniformly distributed between the negative electrode current collector and the solid electrolyte layer.

The average particle diameter of the silver (Ag) nanoparticles may be characterized in being, for example, 1000 nm or less. The average particle diameter of the silver nanoparticles may be measured by a SEM. The average particle diameter of the silver nanoparticles may mean the average particle diameter of the primary particles and/or the average particle diameter of the secondary particles. The average particle diameter of the silver nanoparticles may be, in another embodiment, 900 nm or less, 800 nm or less, 700 nm or less, 600 nm or less, 500 nm or less, 400 nm or less, 300 nm or less, or 200 nm or less. The lower limit of the average particle diameter of the silver nanoparticles is not specifically limited, but may be, for example, about 1 nm or more, 5 nm or more, 10 nm or more, 20 nm or more, or 30 nm or more. The all-solid-state battery of the present disclosure may further suppress the formation of lithium dendrites by distributing the silver nanoparticles having the above-mentioned average particle diameter between the negative electrode current collector and the solid electrolyte layer after battery charging.

The all-solid-state battery of the present disclosure may be characterized in that, for example, a lithium layer is formed between the negative electrode current collector and the solid electrolyte layer during a charging process. Through the combination of the above-described configurations, it is thought that the all-solid-state battery of the present disclosure may suppress the growth of lithium dendrites and thereby prevent the short circuit of the battery, by allowing lithium to react with the silver nanolayer and/or silver nanoparticles existing between the negative electrode current collector and the solid electrolyte layer to form a lithium alloy during the process of precipitating lithium between the negative electrode current collector and the solid electrolyte layer during charging. Meanwhile, in the initial state of the all-solid-state battery (a state before charging after manufacturing the battery) or in a state after discharging, the area between the negative electrode current collector and the solid electrolyte layer may be a lithium-free area that does not contain lithium.

The all-solid-state battery of the present disclosure may be characterized in that, for example, before charging after manufacturing the battery, the ratio (d₂/d₁) of the distance (d₂) between the surface of the negative electrode current collector and the solid electrolyte layer to the thickness (d₁) of the negative electrode current collector is 0.001 to 0.1. In this specification, the "distance between the surface of the negative electrode current collector and the solid electrolyte layer" may mean, for example, the distance from the surface of the negative electrode current collector closer to the solid electrolyte layer among both surfaces thereof to the surface of the solid electrolyte layer closer to the negative electrode current collector among both surfaces thereof. In another embodiment, the all-solid-state battery of the present disclosure may be characterized in that, before charging after manufacturing the battery, the ratio (d₂/d₁) of the distance (d₂) between the surface of the negative electrode current collector and the solid electrolyte layer to the thickness (d₁) of the negative electrode current collector is 0.005 or more, 0.01 or more, 0.015 or more, or 0.02 or more, or 0.09 or less, 0.08 or less, 0.07 or less, 0.06 or less, 0.05 or less, 0.04 or less, or 0.03 or less.

The all-solid-state battery of the present disclosure may be characterized in that, for example, when fully charged, the ratio (d₃/d₁) of the distance (d₃) between the surface of the negative electrode current collector and the solid electrolyte layer to the thickness (d₁) of the negative electrode current collector is 0.5 to 10. The all-solid-state battery of the present disclosure does not include amorphous carbon, but instead, when fully charged, includes distributed silver nanoparticles between the negative electrode current collector and the solid electrolyte layer, thereby further improving energy density while suppressing the growth of lithium dendrites or occurrence of short circuits. In another embodiment the all-solid-state battery of the present disclosure, when fully charged, may be characterized in that the ratio (d₃/d₁) of the distance (d₃) between the surface of the negative electrode current collector and the solid electrolyte layer to the thickness (d₁) of the negative electrode current collector, is 1 or more, 1.5 or more, 2 or more, or 2.5 or more, or 9 or less, 8 or less, 7 or less, 6 or less, 5 or less, or 4 or less.

When the all-solid-state battery is completely discharged, a lithium layer formed between the negative electrode current collector and the solid electrolyte layer during a charging process may move toward a positive electrode side as described later, while being ionized into lithium ions, and, when completely discharged, the area between the negative electrode current collector and the solid electrolyte layer of the all-solid-state battery may become a lithium-free area. Accordingly, when the all-solid-state battery is completely discharged, the distance between the surface of the negative electrode current collector and the solid electrolyte layer may be further reduced compared to a case of being fully charged.

The all-solid-state battery of the present disclosure may be characterized in that, for example, when completely discharged, the ratio (d₄/d₁) of the distance (d₄) between the surface of the negative electrode current collector and the solid electrolyte layer to the thickness (d₁) of the negative electrode current collector is 0.01 or less. In another embodiment, the all-solid-state battery of the present disclosure, when completely discharged, may have the ratio (d₄/d₁) of the distance (d₄) between the surface of the negative electrode current collector and the solid electrolyte layer to the thickness (d₁) of the negative electrode current collector of 0.005 or less or 0.001 or less, and, when completely discharged, since the area between the solid electrolyte layer and the negative electrode current collector is a lithium-free area, and the silver nanoparticles are distributed in a form embedded in the solid electrolyte layer, the d₄/d₁ may be substantially 0.

A known metal that may be used as the current collector of an all-solid-state battery may be used as the negative electrode current collector. For example, the negative electrode current collector may use, for example, a material that does not form an alloy or a compound with lithium. As the negative electrode current collector, for example, a material selected from the group consisting of copper (Cu), nickel (Ni), aluminum (Al), vanadium (V), gold (Au), platinum (Pt), magnesium (Mg), iron (Fe), titanium (Ti), cobalt (Co), chromium (Cr), zinc (Zn), germanium (Ge), indium (In), and stainless steel may be used, but is not limited thereto, and any material used as an electrode current collector in the relevant technical field may be used as long as it does not hinder the purpose of the present disclosure. The negative electrode current collector may be composed of one of the above-described metals, or may be composed of an alloy of two or more metals or a coating material. The negative electrode current collector may be, for example, in the form of a plate, mesh, or foil, but is not limited thereto.

The solid electrolyte layer may include, for example, one or more of a sulfide-based solid electrolyte, an oxide-based solid electrolyte, or a halide-based solid electrolyte. From the viewpoint of accomplishing excellent ion conductivity and high energy density, the solid electrolyte layer may include, but is not limited to, the sulfide-based solid electrolyte.

The sulfide-based solid electrolyte may be, for example, one or more selected from the group including Li₂S-P₂S₅-Li₂O, Li₂S-P₂S₅-Li₂O-LiI, Li₂S-LiBr-LiI-P₂S₅, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂- LiₚMO_{q} (p and q are positive numbers, and M is one among P, Si, Ge, B, Al, Ga, and In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers, and Z is one of Ge, Zn or Ga), Li₂S-GeS₂, Li₇₋ₓPS₆₋ₓClₓ (0≤x≤2), Li₇₋ₓPS₆₋ₓBrₓ (0≤x≤2) and Li₇₋ₓPS₆₋ₓIₓ (0≤x≤2).

The sulfide-based solid electrolyte may be manufactured by, for example, treating starting materials such as Li₂S and P₂S₅, using a melting rapid cooling method or mechanical milling method. In addition, after the treatment, heat treatment may be performed. The solid electrolyte may be amorphous, crystalline, or a mixture state thereof. In the present disclosure, the sulfide-based solid electrolyte may include, for example, at least sulfur (S), phosphorus (P), and lithium (Li) as constituent elements among the above-described sulfide-based solid electrolyte material.

The sulfide-based solid electrolyte may be, for example, an argyrodite-type compound including one or more selected from Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). In particular, the sulfide-based solid electrolyte may be an argyrodite-type compound including one or more selected from Li₆PS₅Cl, Li₆PS₅Br and Li₆PS₅I.

The density of the argyrodite-type solid electrolyte may be, for example, 1.5 to 2.0 grams per cubic centimeter (g/cc). Since the argyrodite-type solid electrolyte has a density of 1.5 g/cc or more, the internal resistance of the all-solid-state secondary battery may be reduced, and the penetration of the solid electrolyte by Li may be effectively suppressed.

The elastic modulus of the sulfide-based solid electrolyte may be, for example, 15 to 45 gigapascals (GPa).

The oxide-based solid electrolyte may be, for example, one or more of a garnet-type solid electrolyte, a Nasicon (Na super ionic conductor)-type solid electrolyte, a LISICON (Li super ionic conductor)-type solid electrolyte, or a perovskite-type solid electrolyte. Particularly, as the oxide-based solid electrolyte, Li₇La₃Zr₂O₁₂, Li₇La₃Zr₂O₁₂ doped with elements such as Al, Y, Ga, Ta and Nb instead of Li, or Li₇La₃Zr₂O₁₂ multi-doped with Ga⁺³-Sc⁺³ at the element sites of Li, La and Zr; coated ones thereof, in which the surfaces thereof are coated with materials such as Al₂CO₃, Ge and ZnO; Na₁₊ₓZr₂Si₂P_{3-X}O₁₂ (0≤x≤3), LiM₂(PO₄)₃ (M = Zr, Ti, Ge), Li₁₊ₓAlₓM₂₋ₓ(PO₄)₃ (0<x<2, M=Zr, Ti, Ge), or those doped with atoms having an oxidation number of +3 such as Y, La and Sc, or doped with atoms having an oxidation number of +2 such as Sr, Mg and Ca instead of Al; xLi₃AO₄₋(1-x) Li₄BO₄ (A: P, As, V or the like, and B: Si, Ge, Ti or the like) or those to which Li₃BO₃ or the like is added; or Li₃ₓLa_{2/3-x}□_{1/3- 2x}TiO₃ (lithium lanthanum titanate (LLTO), 0<x<0.16, and □ is vacancy), La_{0.57-2x/3}SrₓLi_{0.3}TiO₃ or the like may be used, without limitation.

As the halide-based solid electrolyte, Li₂ZrCl₆, Li₂₊ₓZr₁₋ₓMₓCl₆ (M= Fe, Cr, V) and Na₂ZrCl₆ may be used, but are not limited thereto.

The solid electrolyte layer may further include, for example, a binder. As the binder, for example, an aqueous binder, an organic binder, or a combination thereof may be used. The binder may be, for example, polyvinyl alcohol, carboxymethyl cellulose, hydroxypropyl cellulose, diacetyl cellulose, polyvinylidene fluoride, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, an epoxy resin, nylon or a combination thereof. As the aqueous binder, for example, styrene butadiene rubber, carboxymethyl cellulose or a combination thereof may be used. As the organic binder, for example, polytetrafluoroethylene, polyvinylidene fluoride, or a combination thereof may be used.

The solid electrolyte layer may be characterized in having a thickness of, for example, 1 to 100 µm. In other embodiment, the solid electrolyte layer may have a thickness of 2 µm or more, 3 µm or more, 4 µm or more, 5 µm or more, 6 µm or more, 7 µm or more, 8 µm or more, 9 µm or more, 10 µm or more, 11 µm or more, 12 µm or more, 13 µm or more, 14 µm or more, 15 µm or more, 16 µm or more, 17 µm or more, 18 µm or more, 19 µm or more, or 20 µm or more, or 90 µm or less, 80 µm or less, 70 µm or less, 60 µm or less, 50 µm or less, 40 µm or less, or 30 µm or less, without limitation.

The all-solid-state battery of the present disclosure may be characterized in further including, for example, a positive electrode.

The positive electrode may include, for example, a positive electrode active material layer. The positive electrode active material layer may be characterized in including, for example, one or more positive electrode active materials selected from the group consisting of a lithium transition metal oxide, nickel sulfide, copper sulfide, lithium sulfide, iron oxide, and vanadium oxide. The lithium transition metal oxide may be lithium cobalt oxide (LCO), lithium nickel oxide, lithium nickel cobalt oxide, lithium nickel cobalt aluminum oxide (NCA), lithium nickel cobalt manganese oxide (NCM), lithium manganate, lithium iron phosphate, or a combination thereof. The positive electrode active material is not limited thereto, and any positive electrode active material used in the relevant technical field may be used. The positive electrode active materials may be used alone or in a mixture of two or more thereof.

The lithium transition metal oxide may be, for example, a compound represented by any one among the formulas of: LiₐA_{1-b}B_{b}D₂ (where 0.90≤a≤1 and 0≤b≤0.5); LiₐNi_{1-b-c}Co_{b}B_{c}O_{2-α}F₂ (where 0.90≤a≤1, 0≤b≤0.5, 0≤c≤0.05 and 0<α<2); LiₐNi_{1-b-c}Mn_{b}B_{c}D_{α} (where 0.90≤a≤1, 0≤b≤0.5, 0≤c≤0.05 and 0≤α≤2); LiₐNi_{1-b-c}Co_{b}B_{c}D_{α} (where 0.90≤a≤1, 0≤b≤0.5, 0≤c≤0.05 and 0<α≤2); LiₐE_{1-b}B_{b}O_{2-c}D_{c} (where 0.90≤a≤1, 0≤b≤0.5 and 0≤c≤0.05); LiE_{2-b}B_{b}O_{4-c}D_{c} (where 0≤b≤0.5 and 0≤c≤0.05); LiₐNi_{1-b-c}Co_{b}B_{c}O_{2-α}F_{α} (where 0.90≤a≤1, 0≤b≤0.5, 0≤c≤0.05 and 0<α<2); LiₐCoG_{b}O₂ (where 0.90≤a≤1 and 0.001≤b≤0.1); LiₐMnG_{b}O₂ (where 0.90≤a≤1 and 0.001≤b≤0.1); LiₐMn₂G_{b}O₄ (where 0.90≤a≤1 and 0.001≤b≤0.1); LiₐNi_{1-b-c}Mn_{b}B_{c}O_{2-α}F_{α} (where 0.90≤a≤1, 0≤b≤0.5, 0≤c≤0.05 and 0<α<2); LiₐNi_{1-b-c}Mn_{b}B_{c}O_{2-α}F₂ (where 0.90≤a≤1, 0≤b≤0.5, 0≤c≤0.05 and 0<α<2); LiₐNi_{b}E_{c}G_{d}O₂ (where 0.90≤a≤1, 0≤ b≤0.9, 0≤c≤0.5 and 0.001≤d≤0.1); LiₐNi_{b}Co_{c}Mn_{d}GₑO₂ (where 0.90≤a≤1, 0≤b≤0.9, 0≤c≤0.5, 0≤d≤0.5 and 0.001≤e≤0.1); LiₐNiG_{b}O₂ (where 0.90≤a≤1 and 0.001≤b≤0.1.); QO₂; QS₂; LiQS₂; V₂O₅; LiV₂O₅; LiIO₂; LiNiVO₄; Li_{(3-f)}J₂(PO₄)₃ (0≤f≤2); Li_{(3-f)}Fe₂(PO₄)₃ (0≤f≤2); and LiFePO₄. In the compounds, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound having a coating layer added to the surface of the above-described compound may be used as the positive electrode active material, or a mixture of the above-described compound and the compound having a coating layer added thereto may be used. The coating layer added to the surface of the compound may contain, for example, a lithium ion conductive oxide. The lithium ion conductive oxide may include, but is not limited to, LiNbO₃, Li₄Ti₅O₁₂, Li₃PO₄ or the like. The compound forming the coating layer may be amorphous or crystalline. A method of forming a coating layer may consider, for example, a spray coating method, a dipping method or the like, but may be selected without limitation within a range that does not adversely affect the physical properties of the positive electrode active material.

If the positive electrode active material is, for example, a ternary lithium transition metal oxide including nickel (Ni) such as NCA and NCM, it may be possible to increase the capacity density of the all-solid-state battery and reduce the metal elution of the positive electrode active material in a charged state. Accordingly, the cycle characteristics of the all-solid-state battery in a charged state may be improved.

The shape of the positive electrode active material may be, for example, a particle shape such as a sphere or an elliptical sphere. The particle diameter of the positive electrode active material is not particularly limited, and may be within a range applicable to positive electrode active materials of general all solid secondary batteries. The content of the positive electrode active material of the positive electrode is not particularly limited, and may be within a range applicable to positive electrodes of general all-solid-state secondary batteries.

The positive electrode active material layer may further include, for example, a solid electrolyte, a binder, and/or a conductive material.

The solid electrolyte included in the positive electrode active material layer may be, for example, one or more selected from the examples of solid electrolytes included in the solid electrolyte layer, and may be the same as or different from the solid electrolyte included in the solid electrolyte layer.

The solid electrolyte included in the positive electrode active material layer may have, for example, a smaller average particle diameter than that of the solid electrolyte included in the solid electrolyte layer. For example, the average particle diameter of the solid electrolyte included in the positive electrode active material layer may be 90% or less, 80% or less, 70% or less, 60% or less, 50% or less, 40% or less, 30% or less, or 20% or less of the average particle diameter of the solid electrolyte included in the solid electrolyte layer.

The binder included in the positive electrode active material layer may be, for example, one or more selected from the examples of the binder included in the solid electrolyte layer, and may be the same as or different from the binder included in the solid electrolyte layer.

The conductive material included in the positive electrode active material layer may be characterized in being, for example, one or more selected from the group consisting of graphite; carbon black such as acetylene black, Ketjen black, channel black, furnace black, lamp black and thermal black, and carbon fiber.

In addition to the positive electrode active material layer, additives, for example, fillers, coating agents, dispersants, and ion conductive assistants may be further included, and the additives may be used without limitation as long as they are known materials generally used in electrodes of all-solid-state batteries.

The positive electrode may further include, for example, a positive electrode current collector. As the positive electrode current collector, a known metal that may be used as the current collector of an all-solid-state battery may be used. The positive electrode current collector may use, for example, a plate, a mesh, or a foil, composed of copper (Cu), nickel (Ni), aluminum (Al), vanadium (V), gold (Au), platinum (Pt), chromium (Cr), iron (Fe), zinc (Zn), indium (In), germanium (Ge), lithium (Li), magnesium (Mg), stainless steel, titanium (Ti), cobalt (Co), or an alloy thereof. The positive electrode current collector may be omitted in some cases.

In addition to the aforementioned configuration, the positive electrode may further include known configurations that may be included in a positive electrode in an all-solid-state battery.

The all-solid-state battery of the present disclosure, when completely discharged, may be characterized in having a thickness of, for example, 120 to 180 µm based on a monocell including one negative electrode and one positive electrode. The term monocell is the minimum unit of a battery in which a positive electrode and a negative electrode each is formed as a single layer, and in this specification, the monocell may have a structure including a negative electrode, a solid electrolyte layer, and a positive electrode as in an embodiment described later. In another embodiment, the all-solid-state battery of the present disclosure, when completely discharged, may have a thickness of 130 µm or more or 140 µm or more, or 170 µm or less or 160 µm or less based on a monocell including one negative electrode and one positive electrode.

The all-solid-state battery of the present disclosure, when fully charged, may be characterized in having a thickness of, for example, 150 to 210 µm based on a monocell including one negative electrode and one positive electrode. In another embodiment, the all-solid-state battery of the present disclosure, when fully charged may be characterized in having a thickness of 160 µm or more, 170 µm or more, or 200 µm or less, or 190 µm or less, based on a monocell including one negative electrode and one positive electrode.

The all-solid-state battery of the present disclosure may be characterized in having an initial discharge capacity of, for example, 185 milliampere-hours per gram mass (mAh/g) or more as the result of evaluating lifespan characteristics. The initial discharge capacity may be measured, for example, in a manner according to an evaluation embodiment described later. In another embodiment, the all-solid-state battery of the present disclosure may have an initial discharge capacity of 186 mAh/g or more, 187 mAh/g or more, 188 mAh/g or more, 189 mAh/g or more, 190 mAh/g or more, 191 mAh/g or more, 192 mAh/g or more, 193 mAh/g or more, or 194 mAh/g or more.

The all-solid-state battery of the present disclosure may have a capacity retention after 50 cycles of, for example, 80% or more. The capacity retention may be measured, for example, in a manner according to an evaluation example described later. In another embodiment, the all-solid-state battery of the present disclosure may have a capacity retention after 50 cycles of 85% or more, 90% or more, 95% or more, 96% or more, 97% or more, or 98% or more.

Hereinafter, the present disclosure will be explained in detail with reference to examples in order to specifically explain the disclosed contents of the present disclosure as described above and the intended actions and effects of the present disclosure. However, the examples may be modified into various other forms, and the scope of the present specification is not to be construed as being limited to the examples. It is emphasized that the examples represent the present disclosure and are provided to explain the present disclosure in more detail to those skilled in the art.

### Example.

### (Negative Electrode)

Silver (Ag) was deposited on a steel use stainless (SUS) foil (thickness of 10 µm) using an E-beam evaporator equipment. As a result, a negative electrode with a silver (Ag) nanolayer with a thickness of 250 nm formed on the SUS foil was obtained.

### (Positive Electrode)

LiNi_{0.8}Co_{0.15}Mn_{0.05}O₂ (NCM) was prepared as a positive electrode active material, Li₆PS₅Cl in the form of argyrodite-type crystals was prepared as a solid electrolyte, polytetrafluoroethylene (Teflon binder, DuPont) was prepared as a binder, and carbon nanofibers (CNF) were prepared as a conductive material. Then, the materials were mixed in a weight ratio of positive electrode active material: solid electrolyte: conductive material: binder = 83.8: 14.8: 0.2: 1.2, and the mixture was molded into a large sheet shape to produce a positive electrode sheet. Subsequently, the positive electrode sheet was pressed onto an aluminum foil positive electrode current collector with a thickness of 10 µm to manufacture a positive electrode. The initial charge capacity (charge capacity at the first cycle) of the positive electrode was about 20 milliampere-hours (mAh) at 4.25 volts (V) charge. The weight of the positive electrode was about 110 milligrams (mg). (About 203 mAh/g per active material weight).

### (Solid Electrolyte Layer)

A solid electrolyte layer used a solid electrolyte containing Li₆PS₅Cl.

### (All-solid-state battery)

An all-solid-state battery was fabricated by stacking the positive electrode, the solid electrolyte layer, and the negative electrode and sealing them in a pouch under a vacuum state. Here, each part of the positive electrode current collector and the negative electrode current collector was protruded out of the pouch so that the vacuum of the battery could be maintained. The protrusions were used as the positive electrode and negative electrode terminals. In addition, the all-solid-state battery was subjected to a hydrostatic treatment at 500 megapascals (MPa) for 30 minutes. By performing the hydrostatic treatment, the characteristics as a battery were markedly improved.

### Comparative Example 1.

An all-solid-state battery was obtained in the same manner as in the Example, except that aluminum (Al) was deposited on the SUS foil instead of silver (Ag) during manufacturing the negative electrode to obtain a negative electrode in which an aluminum (Al) nanolayer with a thickness of 250 nm was formed on the SUS foil.

### Comparative Example 2.

An all-solid-state battery was obtained in the same manner as in the Example, except that Si₃N₄ was deposited on the SUS foil instead of silver (Ag) during manufacturing the negative electrode to obtain a negative electrode in which a silicon nitride (Si₃N₄) nanolayer with a thickness of 250 nm was formed on the SUS foil.

### Comparative Example 3.

An all-solid-state battery was obtained in the same manner as in the Example, except for manufacturing a negative electrode as follows.

### (Negative Electrode)

6 grams (g) of carbon black (average particle diameter of 41 nm), 9.33 g of a polyvinylidene fluoride (PVdF) solution (solid content of 6%), and 7.19 g of a N-methyl-2-pyrrolidone (NMP) solution were placed in a thinky mixer container and mixed 12 times for 3 minutes at 2000 rpm. Then, 5 g of a NMP solution was additionally added, and mixing was performed 5 times for 3 minutes at 2000 rpm to prepare an anode-free coating layer slurry. Then, the slurry was applied on a SUS foil having a thickness of 10 µm using a bar coater, dried in the air at 80°C for 20 minutes, and then vacuum-dried at 100°C for 12 hours. As a result, a negative electrode having an anode-free coating layer having a thickness of 10.0 µm and a porosity of 67.1% was formed on the SUS foil was obtained.

### Comparative Example 4.

An all-solid-state battery was obtained in the same manner as in the Example, except for using an untreated SUS foil (thickness of 10 µm) as a negative electrode.

### Evaluation Example 1. SEM-EDS Analysis

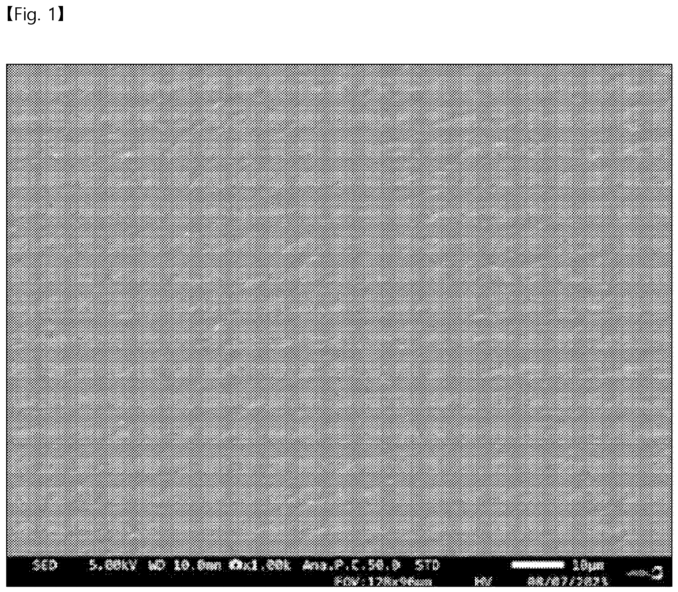

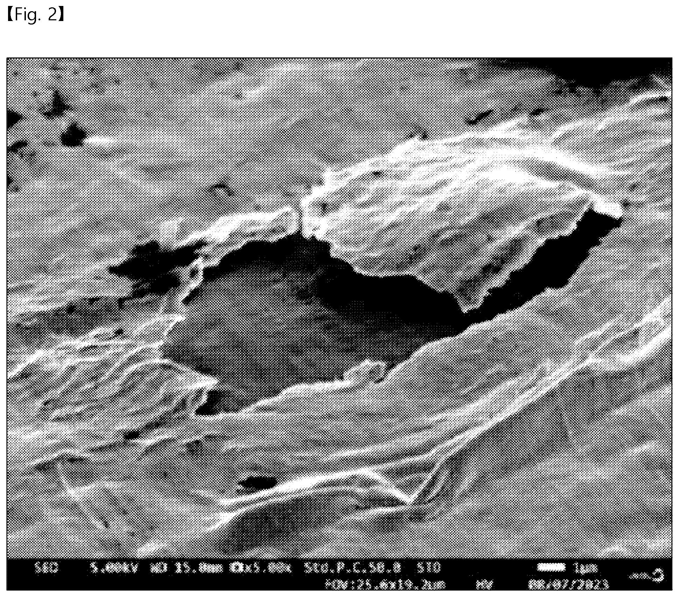

After cutting an arbitrary area of the negative electrode of the Example into a size of 10 mm x 10 mm to prepare a sample, the silver (Ag) nanolayer surface of the sample was observed through a scanning electron microscope (SEM) to obtain images as shown in FIGS. 1 and 2. FIG. 1 is an image observed at 1K magnification, and FIG. 2 is an image observed at 5K magnification.

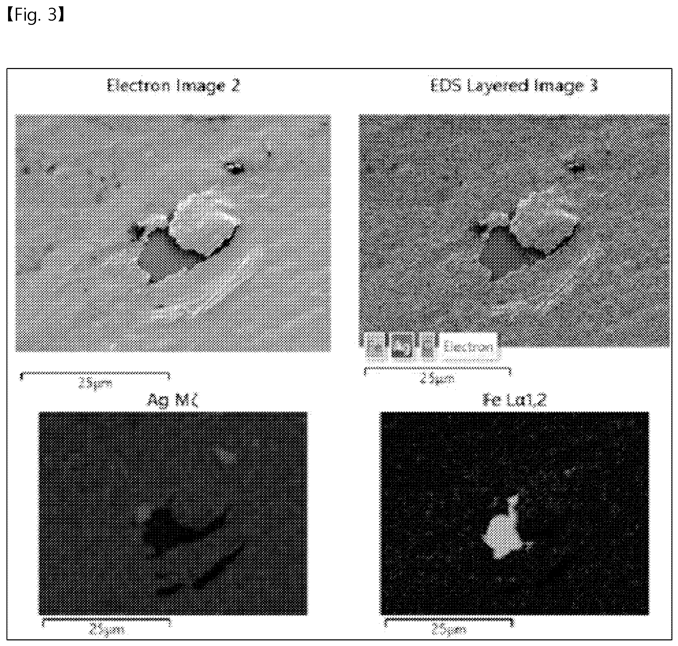

Meanwhile, the results of component analysis conducted on the sample using energy dispersive spectroscopy (EDS) under the conditions below were confirmed as shown in FIG. 3.

### (EDS Analysis Conditions)

- Acceleration voltage: 15 kilovolts (kV)
- Time: 1.5 minutes

### Evaluation Example 2. Monocell Performance Evaluation

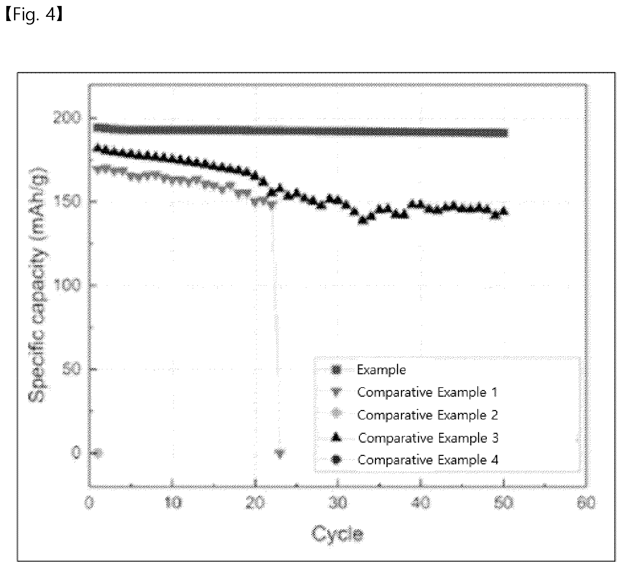

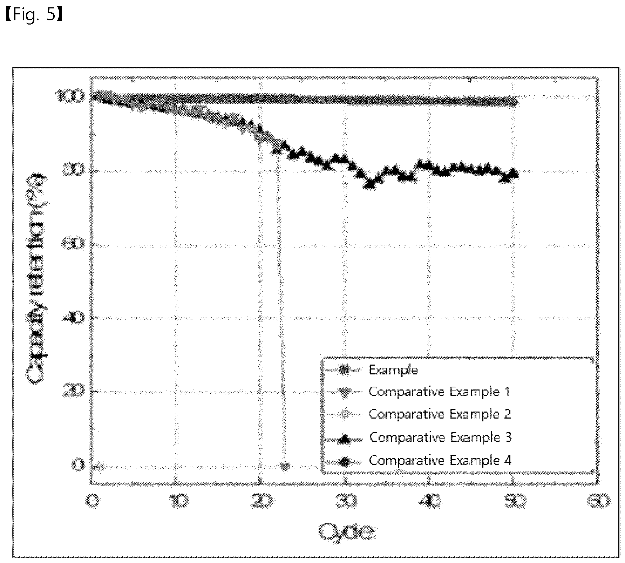

The all-solid-state batteries (pouch-type monocells) of the Example and Comparative Examples were operated under the charge and discharge conditions below at an operating voltage range of 4.25 V to 3.0 V and an operating temperature of 60°C to evaluate the capacity and capacity retention according to the cycle, and the results are shown in Table 1, and FIGS. 4 and 5.
Charge conditions: 0.33 coulombs (C), 4.25 V constant current/constant voltage (CC/CV), 0.1 C cut-off
Discharge conditions: 0.33 C, 3.0 V, CC

**[Table 1]**

| Division | 1^{st} cycle discharge capacity | Capacity retention (%) |
|---|---|---|
| Example | 194.1 mAh/g | 98.4% @ 50 cycle |
| Comparative Example 1 | 169.4 mAh/g | Short @ 23 cycle |
| Comparative Example 2 | 0 | Short @ 1 cycle |
| Comparative Example 3 | 181.6 mAh/g | 79.3% @ 50 cycle |
| Comparative Example 4 | 0 | Short @ 1 cycle |

## Claims

1. An all-solid-state battery using lithium or a lithium alloy as a negative electrode active material,
wherein the all-solid-state battery comprises a negative electrode current collector and a solid electrolyte layer,
a silver (Ag) nanolayer is comprised between the negative electrode current collector and the solid electrolyte layer, or silver (Ag) nanoparticles are distributed between the negative electrode current collector and the solid electrolyte layer, and
amorphous carbon is not comprised between the negative electrode current collector and the solid electrolyte layer.

2. The all-solid-state battery according to claim 1, wherein, after manufacturing the battery, the silver (Ag) nanolayer is comprised between the negative electrode current collector and the solid electrolyte layer before charging, and the silver (Ag) nanoparticles are distributed between the negative electrode current collector and the solid electrolyte layer after charging.

3. The all-solid-state battery according to claim 1, wherein the silver (Ag) nanolayer is a silver deposition layer.

4. The all-solid-state battery according to claim 1, wherein a thickness of the silver (Ag) nanolayer is 1000 nanometers (nm) or less.

5. The all-solid-state battery according to claim 1, wherein an average particle diameter of the silver (Ag) nanoparticles is 1000 nm or less.

6. The all-solid-state battery according to claim 1, wherein, after manufacturing the battery and before charging, a ratio (d₂/d₁) of a distance (d₂) between a surface of the negative electrode current collector and the solid electrolyte layer to a thickness (d₁) of the negative electrode current collector is 0.001 to 0.1.

7. The all-solid-state battery according to claim 1, wherein, when fully charged, a ratio (d₃/d₁) of a distance (d₃) between a surface of the negative electrode current collector and the solid electrolyte layer to a thickness (d₁) of the negative electrode current collector is 0.5 to 10.

8. The all-solid-state battery according to claim 1, wherein, when completely discharged, a ratio (d₄/d₁) of a distance (d₄) between a surface of the negative electrode current collector and the solid electrolyte layer to a thickness (d₁) of the negative electrode current collector is 0.01 or less.

9. The all-solid-state battery according to claim 1, wherein the solid electrolyte layer comprises a sulfide-based solid electrolyte.

10. The all-solid-state battery according to claim 9, wherein the sulfide-based solid electrolyte is one or more selected from the group comprising Li₂S-P₂S₅-Li₂O, Li₂S-P₂S₅-Li₂O-LiI, Li₂S-LiBr-LiI-P₂S₅, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q} (p and q are positive numbers, and M is one among P, Si, Ge, B, Al, Ga and In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers, and Z is one of Ge, Zn or Ga), Li₂S-GeS₂, Li₇₋ₓPS₆₋ₓClₓ (0≤x≤2), Li₇₋ₓPS₆₋ₓBrₓ (0≤x≤2) and Li₇₋ₓPS₆₋ₓIₓ (0≤x≤2).

11. The all-solid-state battery according to claim 1, further comprising a positive electrode.

12. The all-solid-state battery according to claim 11, when completely discharged, having a thickness of 120 to 180 micrometers (µm) based on a monocell comprising one negative electrode and one positive electrode.

13. The all-solid-state battery according to claim 11, when fully charged, having a thickness of 150 to 210 µm based on a monocell comprising one negative electrode and one positive electrode.

14. The all-solid-state battery according to claim 1, wherein, as a result of lifespan characteristics evaluation, an initial discharge capacity is 185 milliampere-hours per gram mass (mAh/g) or more.

15. The all-solid-state battery according to claim 1, wherein, after 50 cycles, a capacity retention is 80% or more.
